# EUROPEAN PATENT APPLICATION

(11) **EP 3 534 065 A1**
(43) Date of publication of application: **04.09.2019**
(21) Application number: 18159354.2
(22) Date of filing: 01.03.2018
(51) Int. Cl.: F21V 5/00, F21V 8/00, F21W 131/406, F21Y 115/10, F21Y 113/10, F21V 14/00, F21S 10/00

(54) **LIGHT COLLECTING ELEMENT**

(71) Applicant: Harman Professional Denmark ApS, 2800 Aarhus (DK)
(72) Inventor: Jørgensen, Dennis Thykjær, 8410 Rønde (DK); Kildeby, Nina Lillelund, 8751 Gedved (DK)
(74) Representative: Bertsch, Florian Oliver

(57) **Abstract**

The current invention relates to a light collecting element (100) comprising:
- a plurality of light entrance surfaces (121, 131)
- a light exit surface (102) having a circularly shapted outer boundary,
- a plurality of light collecting legs (110-170), each light collecting leg comprising a leg entrance surface (121, 131) and a leg exit surface (112-172), each light collecting leg being configured to guide and mix light entering the corresponding leg entrance surface and exiting the corresponding light collecting leg at the leg exit surface,
wherein the leg entrance surfaces of all of the light collecting legs form the plurality of light entrance surfaces of the light collecting element and the leg exit surfaces of all light collecting legs form the light exit surface having the circularly shaped outer boundary,
wherein the light collecting legs (110-170) are arranged relative to one another such that light entering the light collecting legs at all leg entrance surfaces and exiting the light collecting element at the light exit surface (102) converges at a focal plane (201).

## Description

### Technical filed

The present invention relates to light collecting element and to a light system comprising the light collecting element.

### Background

For the creation of various light effects in concerts, life shows, TV shows, sport events, or as part of an architectural installation, light systems creating various light effects are getting more and more appreciated in the industry. Typically entertainment light systems create a light beam having a beam width and a divergence and can for instance be wash/flood light systems creating a relatively wide light beam or can be a protecting system configured to project images onto a target surface.

Projecting light systems typically comprise one or more optical gates illuminated by the light system and an optical projecting module is configured to collect light passing through the optical gate along an optical axis. A beam shaping object may be arranged at the optical gate, or near the optical gate, and is used to shape the light beam. The optical gate may be delimited by an aperture, however it is to be understood that a physical aperture can be omitted and that the beam shaping object can also constitute an aperture. The beam shaping object can also be used to create midair effects which are visible due to light scattering on smoke in the air, where the shape of the light beam in midair is defined by the beam shaping object. The beam shaping object may also create a light pattern which is projected to an image on a target surface.

The beam shaping objects can be used as static objects arranged in the light beam and/or as dynamic objects which are moved in relation to the light beam in order to create a dynamic light effect.

Light designers and programmers want as many different effects as possible in a light system, as this gives the light designer and programmer many options when creating a light show. However, it is difficult to provide lighting systems with many effects as for each light effect a component has to be provided which takes up space in the housing of the light system. Especially it is difficult to provide many different beam shaping objects in a projecting light system as the beam shaping objects need to be positioned in a focal plane of the optical system, and typically the systems are only capable of focusing in a very limited area. At the same time the light system should be easy to handle and compact in size.

Accordingly, there is a need to increase the options for creating different light effects.

### Summary

This need is met by the features of the independent claims. Further aspects are described in the dependent claims.

According to a first aspect a light collecting element is provided comprising a plurality of light entrance surfaces and comprising a light exit surface. The light collecting element furthermore comprises a plurality of light collecting legs, each light collecting leg comprising a leg entrance surface and leg exit surface, wherein each light collecting leg is configured to guide and mix light entering the corresponding leg entrance surface and exiting the corresponding light collecting leg at the leg exit surface. The leg entrance surfaces of all of the light collecting legs form the plurality of light entrance surfaces of the light collecting element and the leg exit surfaces of all light collecting legs form the light exit surface having an outer boundary. The light collecting legs are furthermore arranged relative to one another such that light entering the light collecting legs at all leg entrance surfaces and exiting the light collecting element at the light exit surface converges at a focal plane.

With this arrangement of the light collecting element different light beams can be generated which converge at a focal plane. With the different light beams of the different light collecting legs different optical effects can be achieved, either by controlling the light intensity with which each of the light collecting legs is illuminated and/or by selecting a color of the light that is used to illuminate the corresponding light entrance surfaces. Preferably the outer boundary has a circular or near circular shape. The shape may also be hexagonial or may be approximated by a polygon. The quasi circularly shaped outer boundary of the light exit surface helps that a maximum amount of light illuminates the focal plane and helps to provide an embodiment which is invariant to rotationand gives best optical efficiency with a round gate.

Furthermore, a light system is provided comprising a light collecting element as mentioned above or as described in further detail below. The light system furthermore comprises a plurality of light sources, wherein at least one light sources is arranged opposite each light collecting leg and is configured to illuminate the light entrance surface of one of the light collecting legs. Each light collecting leg is furthermore configured to generate a light beam and wherein the light beams of the plurality of light collecting legs converge in direction of an optical axis of the light system at the focal plane. The light system comprises an optical gate located substantially at the focal plane of the light collecting element. Furthermore, at least one light effect module located on the optical axis in proximity of the optical gate is provided which is configured to modify the light beams of the plurality of light collecting legs. Additionally, a projecting module configured to project an image provided by the optical gate at a target surface along the optical axis is provided.

The light system with the light collecting element can provide different light beams generated by the different light collecting legs. With the light effect module in proximity of the optical gate and with the different light beams generated by the different light collecting legs a variety of different light effects is obtained as different illumination situation can be obtained at the optical gate. Furthermore, a single beam can be obtained at the optical gate when all beams of the different light collecting legs illuminate the optical gate.

It is to be understood that the features mentioned above and features yet to be explained below can be used not only in the respective combinations indicated, but also in other combinations or in a relation without departing from the scope of the present application. Features of the above-mentioned aspects and embodiments described below may be combined with each other in other embodiments unless explicitly mentioned otherwise.

### Brief description of the drawings

The foregoing and additional features and effects of the application will become apparent from the following detailed description when read in conjunction with the accompanying drawings in which like reference numerals refer to like elements.
Figure 1 schematically illustrates a light system incorporating features of the invention.
Figure 2 is a schematic perspective view of a light collecting element of the invention which can be incorporated into a light system of figure 1.
Figure 3 shows a further perspective view of the light collecting element of figure 2.
Figure 4 shows another example of a light exit surface of the light collecting element shown in figure 2 and 3.
Figure 5 shows a schematic side view of the light collecting element shown in figure 3 and 4.
Figure 6 shows a schematic rear view of the light collecting element shown in figure 3 to 5.
Figure 7 shows a schematic front view of the light collecting element.
Figure 8 shows a sectional view of the light collecting element along line AA of figure 7.

### Detailed description

In the following, embodiments of the invention will be described in detail this reference to the accompanying drawings. It is to be understood that the following description of embodiments is not to be taken in a limiting sense. The scope of the invention is not intended to be limited by the embodiments described hereinafter or by the drawings, which are to be illustrative only.

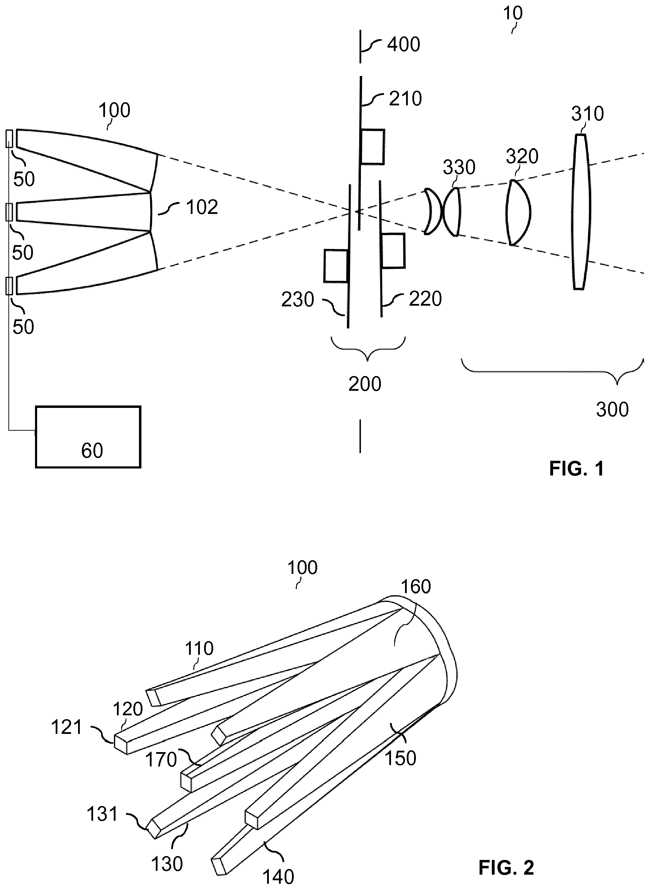

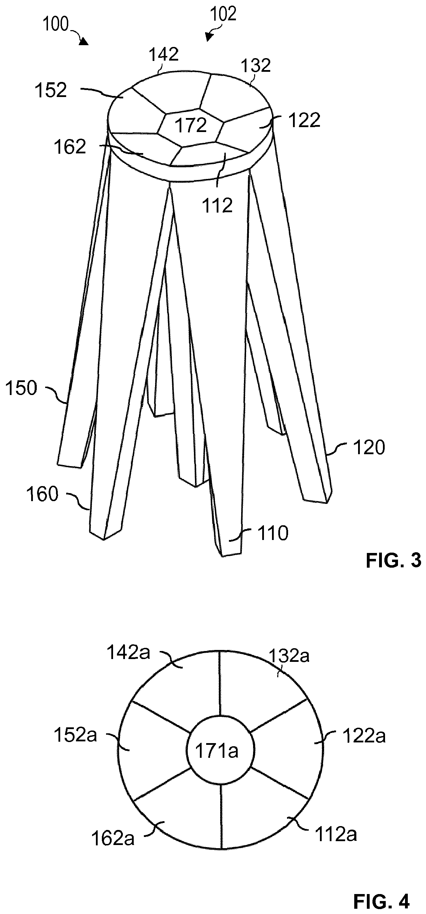

The drawings are to be regarded as being schematic representations, and elements illustrated in the drawings are not necessarily shown to scale. Rather the various elements are represented such that their function and general-purpose becomes apparent to a person skilled in the art. Any connection or coupling between functional blocks, devices, components of physical or functional units shown in the drawings and described hereinafter may also be implemented by an indirect connection or coupling. A coupling between components may be established over a wired or wireless connection. Figure 1 shows a schematic view of a light system which provides further animation effects and which provides an even greater freedom to create unique and creative lighting effects. The light system comprises a plurality of light sources 50 which are located in front of a light collecting element 100. As shown in more detail in figures 2 and 3 the light collecting element 100 comprises a plurality of light collecting legs 110, 120, 130, 140, 150, 160 and 170 which collect and mix the light and emit the light at a light exit surface 102 of the light collecting element 100. For the sake of clarity only three of the light collecting legs are shown in figure 1.

Preferably a plurality of light sources 50 are located in front of each light collecting leg 110 to 170, preferably light sources of different color. The light generated by these light sources is collected and mixed by the different light collecting legs and is focused to different light beams as will be explained in further detail below. The different light beams are combined to form a single circular light beam which is focused into an optical gate 400 where a light effect system 200 with plurality of light effect modules 210, 220 and 230 are provided. These light effect modules 210 to 230 are arranged near the optical gate 400 and configured to modify the light beam. After passing through the light effect modules a projecting system 300 is provided which is configured to project an image of the optical gate, or a plane in the proximity of this onto a target surface along the optical axis A. The projecting system in fig 1. comprises a front lens 310, a zoom group 320 and a focus group 330. The projection system could be designed with any number of lens groups.

The light sources can be LEDs wherein preferably a group of LEDs is located in front of each light collecting leg. Preferably, LEDs of different colors such as, a green LED, a blue LED and a white LED are provided in front of each light collecting leg and are arranged such that the light of this group of LEDs illuminates one leg entrance surface such as the surfaces 121 or 131 shown in figure 2.

It should be understood that any kind of light sources such as discharge lamps, OLEDs, PLEDs, plasma sources, halogen sources, fluorescent and plasma light sources, laser and combinations thereof might be used. Each of the light sources is connected to a control unit 60 configured to individually control each of the light sources. As a consequence it is possible to provide different illuminations to the light collecting legs and thus to the optical gate 200 and these illuminations can be used to create different light effects.

Referring to figures 2 and 3 the light collecting element 100 comprises the light collecting legs, in the example shown seven different light collecting legs which each have a leg entrance surface such as entrance surface 121 and 131 shown in figure 2 through which the light of the light sources enter the corresponding light collecting legs. As can be seen in further detail in figure 3 or 4, each light collecting leg has a leg exit surface. Light collecting leg 110 comprises a leg exit surface 112, light collecting leg 120 comprises leg exit surface 122. With the given number of light collecting legs seven leg exit surfaces are provided, namely exit surfaces 112, 122, 132, 142, 152, 162, and 172. In the example shown a center light collecting leg 170 is provided at the center of the light exit surface 102 which is surrounded by the other leg exit surfaces of the remaining light collecting legs. As shown in figure 3 the light exit surface 102 comprises a plurality of different surface segments, namely the segments 112, 122, 132, 142, 152, 162 and 172. One surface segment is provided for each light collecting leg. In the example shown one central light collecting leg with one central leg exit surface is surrounded by the other six legs and the corresponding leg exit surfaces. It should be understood that any other number of light collecting legs may be used. By way of example 5 light collecting legs with one central leg and 4 surrounding legs. In these examples an odd number of light collecting legs is used. However, even an even number of light collecting legs may be used. If no central light collecting leg is used, a number of 4 or 6 legs with 4 or 6 leg exit surfaces may be used. These leg exit surfaces would have the form of a circle segment and build the complete circular light exit surface 102. The circular outer shape of the light exit surface 102 composed of the different leg exit surfaces has the advantage that a maximum amount of light is provided at gate 400 which can also have a circular shape. The shape of the combined exit surface is not limited to round but could be arrange to be rectangular, hexagon or any prefred shape.

Figure 4 shows another embodiment in which the central leg exit surface 172a does not have a hexagonal shape as shown in figure 3 but has a circular shape. Accordingly, the leg exit surface 172a is surrounded by the other leg exit surfaces 112a to 162a which again build a light exit surface with a circular shape.

As shown in figure 2 and 3 each light collecting leg 110, 120, 130, 140, 150, 160, and 170 has a leg entrance surface with a smaller cross-section compared to the corresponding leg exit surfaces. Accordingly, the cross-section of each light collecting leg increases from the leg entrance surface to the leg exit surface so that a diverging light beam exits each of the leg exit surfaces. With the cross-section at the leg entrance surface and at the leg exit surface the width of the beam at gate 400 can be controlled.

By using leg with increasing area from input to exit surface the agular divergence of the guided light is reduced.

Each light collecting leg functions as a light mixer that ensures that the light of the different light sources is fully mixed before the gate 400. The different light collecting legs are angled relative to each other such that the different beams all converge at a focal plane 201. The area at the optical gate illuminated by a single light collecting leg is such that not the complete optical gate is illuminated At the exit surface substantially only the exit surface of the illuminated leg is lit up. By moving away from the exit surface the overlap becomes gradually larger. Different light effect modules 210 to 230 are provided near the optical gate. These light effect modules can comprise beam shaping objects in which the shape of the light beam is defined by the beam shaping object. The light effect modules can create midair effects visible due to the light scattering in smoke or haze provided in the air or can create a light pattern which is projected and imaged on a target surface not shown in figure 1. The light effect module can comprise any object capable of modifying the light beam and can for instance comprise a static or dynamic gobo, an animation wheel, color filter, prisms, framing blades, texture glass or any other means known in the art of light design. The different light effect modules can be arranged as movable objects which are moved in relation to the light beams in order to create a dynamical light effect.

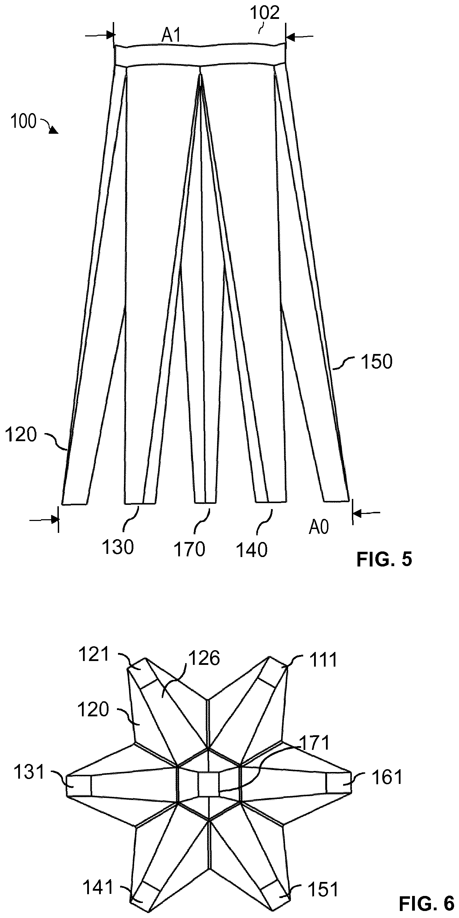

As can be seen in figures 2 and 5 the outer light collecting legs are tilted relative to one another such that the beam generated by each of the light collecting legs converge the focal plane to 201. Accordingly, the surface covered by all the leg entrance surfaces including the space between any of the leg entrance surfaces is larger than the surface covered by the circular light exit surface 102. Accordingly the area A0 covered by the light collecting element at the plurality of entrance surfaces and limited by the arrows shown in figure 5 at the bottom part is larger than the area A1 at the light exit surface 102.

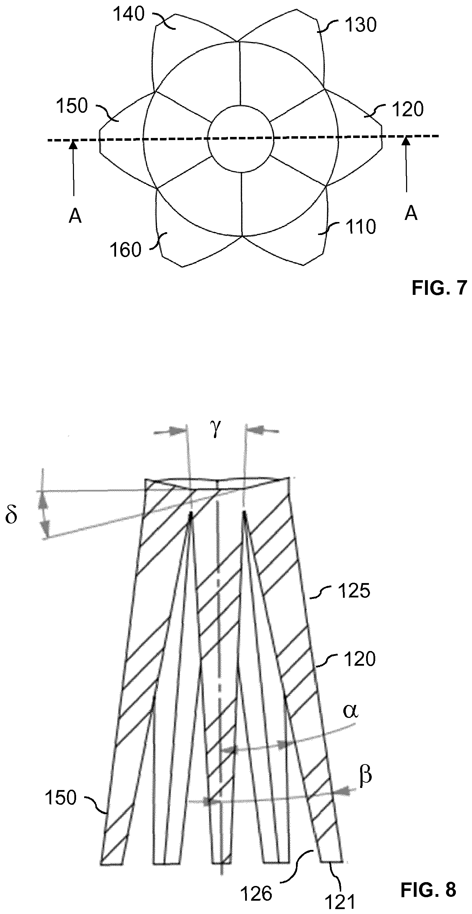

References is furthermore made to figure 7 and 8 where figure 7 shows a front view of the light collecting element 100 and figure 8 shows a sectional view along lines A-A of figure 7. As shown in figure 8 the angle β defined between the outer surfaces of the light collecting legs and the central axis of the light collecting element which is coincident with the optical axis can be between 5 and 10 degress, preferably between6 and 8 degrees, more preferably between 7 and 8 degrees,. The angle α between the central axis and the inner outer surface of the leg can be between 8 and 15 degrees, preferably between 10 to 13 degrees, more preferable between 11 and 12 degrees. Accordingly each outer leg has an outer leg surface such as surface 125 shown for a light collecting leg 120 in figure 8 and comprises an inner outer leg surface 126 facing the central axis of the light collecting element. The inner outersurface 126 is also shown in figure 6.

In the embodiments shown in figures 2 to 8 each light collecting leg has a rectangular cross-section at the leg entrance surface such as surface 121 wherein the cross-section linearly increases until the leg exit surface which can be shaped as shown in figure 7 or in figure 4.

It should be understood that each of the leg entrance surfaces may also have a different shape such as a hexagonal shape or a circular shape.

The increasing cross-section is also shown by the angle γ shown in figure 8 which can be between 2 and 10 degresse, preferably between 4 and 7 degrees, more preferably preferably between 5 and 6 degrees. As furthermore shown in figure 8 the different surface segments of the light exit surface 102 can be arranged relative to one another such that the central surface, e.g. surface 172 of figure 3 or 172a of figure 4 is perpendicular to the optical axis whereas the other leg exit surfaces are tilted such that the different light beams exiting the different light collecting legs converge at the focal plane 201. But way of example the angle δ shown in figure 8 it may be between 12 and 15 degrees and mainly depends on the distance between the leg exit surfaces of the light collecting element 100 and the location of the optical gate with the focal plane 201.

The light collecting element 100 is placed at a fixed distance to the gate which is close enough to the gate to allow individual images of each of the different light beams generated by the light collecting legs to be generated. However, the distance is far enough to keep the ability to have a single homogeneous common beam which means that the user won't be able to see the different areas of the surface segments of the different leg exit surfaces. This means that the projection system can focus at different planes around the exit surface, and moving the focus away from the exit surface will increase the partial overlap of the light from the individual legs at the focus plane.. Accordingly, the proposed light system 10 has the advantage that different light beams can be generated by the different light collecting legs which can be illuminated with different colors and different intensities while keeping the ability to use the light system without seeing the individual light beams at the target surface to which the light beam is projected.

From the above said some general conclusions can be drawn:

As far as the light collecting element 100 is concerned, the surface area covered by the leg entrance surfaces and any space between any of the leg entrance surfaces is larger than the surface area built by all the leg exit surfaces at the light exit surface 102. As discussed in connection with figure 5 this means that the area A0 is larger than area A1 shown in figure 5.

The plurality of the light collecting legs 110 to 170 can be arranged relative to each other at the light exit surface 102 such that one leg exit surface of one of the light collecting legs is located at the center of the light exit surface and is surrounded by the leg exit surfaces of the remaining light collecting legs. In a further embodiment it is possible to have no central leg exit surface, but different leg exit surfaces built a circle with each of them providing a circular segment of the complete circle. The light exit surface 102 of the light collecting element 100 comprises a plurality of different surface segments wherein one surface segment is provided for each of the light collecting legs. The different surface segments can be tilted relative to the other surface segments such that the light exiting the different surface segments converges at the focal plane, near the gate of the light system 10.

The cross-section of each light collecting leg can increase from the corresponding leg entrance surface to the leg exit surface such that the cross-section of the leg exit surface is larger than at the leg entrance surface.

The cross-section at each leg entrance surface can be rectangular with the cross-section at the leg exit surfaces being such that the complete light exit surface having the circular -shaped outer boundary is composed by the leg exit surfaces of the light collecting legs. Preferably an uneven number of light collecting legs is used, however the light collecting element may also operate number of light collecting legs.

As far as the complete light system is concerned a plurality of LEDs, namely a group of LEDs can illuminate each leg entrance surface wherein each group comprises preferably LEDs of different colors.

Furthermore, a control module can be provided for each of the light sources which individually controls the amount of light emitted by the corresponding light source.

The light system 10 can furthermore comprise a zoom module which is configured to amend a focal plane of the projecting module along the optical axis wherein the light collecting element is provided at a pre-defined fixed distance from the gate.

Preferably a plurality of different light effect modules are provided in proximity of the optical gate wherein each light effect module modifies the light beam in a different way.

Summarizing the present invention provides a light system with a light collecting element along the generation of individually control beams which create individual images provided by the light effect modules but which is still able to provide a single homogeneous common beam.

## Claims

1. A light collecting element (100) comprising:
- a plurality of light entrance surfaces (121, 131)
- a light exit surface (102) having an outer boundary,
- a plurality of light collecting legs (110-170), each light collecting leg comprising a leg entrance surface (121, 131) and a leg exit surface (112-172), each light collecting leg being configured to guide and mix light entering the corresponding leg entrance surface and exiting the corresponding light collecting leg at the leg exit surface,
wherein the leg entrance surfaces of all of the light collecting legs form the plurality of light entrance surfaces of the light collecting element and the leg exit surfaces of all light collecting legs form the light exit surface having the outer boundary,
wherein the light collecting legs (110-170) are arranged relative to one another such that light entering the light collecting legs at all leg entrance surfaces and exiting the light collecting element at the light exit surface (102) converges at a focal plane (201).

2. The light collecting element (100) according to claim 1, wherein a surface area covered by the leg entrance surfaces (121, 131) and any space provided between any of the leg entrance surfaces is larger than a surface area built by all leg exit surfaces (112-172) at the light exit surface (102).

3. The light collecting element (100) according to any of the preceding claims, wherein the plurality of light collecting legs (110-170) are arranged relative to each other at the light exit (102) surface such that one leg exit surface (172) of one of the light collecting legs (170) is located at the center of the light exit surface (162) surrounded by the leg exit surfaces of the remaining light collecting legs.

4. The light collecting element (100) according to any of the preceding claims, wherein the light exit surface (102) is a surface comprising a plurality of different surface segments, with one surface segment being provided for each light collecting leg.

5. The light collecting element (100) according to claim 4, wherein the different surface segments are tilted relative to one another such that light exiting the different surface segments converges at the focal plane (201).

6. The light collecting element (100) according to any of the preceding claims, wherein a cross section of each light collecting leg (110-170) increases from the corresponding leg entrance surface to the leg exit surface such that the cross section at the leg exit surface is larger than at the leg entrance surface.

7. The light collecting element (100) according to any of the preceding claims, wherein a cross section at each leg entrance surface is rectangular with the cross section at each leg exit surface being such that the complete light exit surface comprises a circularly shaped outer boundary and is built by the leg exit surfaces of all light collecting legs (110-170).

8. The light collecting (100) element according to any of the preceding claims, comprising an uneven number of light collecting legs (110-170).

9. The light collecting element according to any of the preceding claims, wherein the light exit surface has a substantially circularly shaped outer boundary.

10. A light system (10) comprising:
- a light collecting element (100) according to any of the preceding claims,
- a plurality of light sources (50), wherein at least one light source is arranged opposite each light collecting leg (110-170) and is configured to illuminate the leg entrance surface of one of the light collecting legs, wherein each light collecting leg (110-170) is configured to generate a light beam, wherein the light beams of the plurality of light collecting legs converge in direction of an optical axis at the focal plane (201),
- an optical gate (400) located substantially at the focal plane of the light collecting element,
- at least one light effect module (210-230) located on the optical axis in proximity of the optical gate (400) and configured to modify the light beams of the plurality light collecting legs,
- a projecting module (300) configured to project an image provided at the optical gate at a target surface along the optical axis.

11. The light system (10) according to claim 10, wherein the plurality of light sources comprise a plurality of LEDs, wherein a group of LEDs illuminates each leg entrance surface (121, 131).

12. The light system (10) according to claim 11, wherein each group of LEDs illuminating one leg entrance surface comprises LEDs of at least two different colors.

13. The light system (10) according to claim 12, wherein each group comprises at least one LED emitting red light, at least one LED emitting green light, and at least one LED emitting blue light.

14. The light system (10) according to any of claims 10 to 13, further comprising a control module (60) configured to individually control an amount of light emitted by each of the light sources of the light system.

15. The light system (10) according to any of claims 10 to 14, further comprising a zoom module (320) located on the optical axis configured to amend a focal plane of the projecting module (300) along the optical axis, wherein the light collecting element (100) is provided at a predefined fixed distance from the optical gate.

16. The light system (10) according to any of claims 10 to 15, wherein a plurality of different light effect modules (210-230) are provided in proximity of the optical gate, each light effect module modifying the different light beams in a different way.
